(19) Europäisches Patentamt
European Patent Office
Office européen des brevets

(11)  EP 4 600 621 A1

(12)  **EUROPEAN PATENT APPLICATION**
published in accordance with Art. 153(4) EPC

(43) Date of publication:
**13.08.2025   Bulletin 2025/33**

(21) Application number: **23874894.1**

(22) Date of filing: **04.10.2023**

(51) International Patent Classification (IPC):
**G01L 1/00** (2006.01)       **G01L 1/02** (2006.01)

(52) Cooperative Patent Classification (CPC):
**G01L 1/00; G01L 1/02**

(86) International application number:
**PCT/JP2023/036188**

(87) International publication number:
**WO 2024/075768 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **04.10.2022   JP 2022160509**

(71) Applicant: **Hitachi Construction Machinery Co.,
Ltd.
Tokyo 110-0015 (JP)**

(72) Inventors:
• INOUE, Takeshi
  **Tokyo 100-8280 (JP)**
• MATSUDA, Yasuhiro
  **Tsuchiura-shi, Ibaraki 300-0013 (JP)**
• OHNO, Takayuki
  **Tsuchiura-shi, Ibaraki 300-0013 (JP)**
• TANAKA, Ryohei
  **Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54)  **STRESS ESTIMATION DEVICE**

(57)      The disclosure provides a stress estimation device that allows estimating a stress acting on a dump truck with higher accuracy. The stress estimation device 100 includes a storage section 110 and a calculation section 120, and estimates the stress acting on a dump truck 200. The storage section 110 stores a force calculation formula 111 and a stress calculation formula 112. The calculation section 120 includes a force calculation section 121 and a stress calculation section 122. The force calculation section 121 calculates a force acting on a predetermined part of the dump truck 200 using an output value of a force sensor 230 or an output value of an acceleration sensor 240, an output value of the force sensor 230, and the force calculation formula 111 stored in the storage section 110. The stress calculation section 122 calculates the stress acting on the dump truck 200 using the force calculated by the force calculation section 121 and the stress calculation formula 112 stored in the storage section 110.

Fig. 1

**Description**

Technical Field

The present disclosure relates to a stress estimation device.

Background Art

Conventionally, a stress calculation system for a dump truck has been known. For example, the stress calculation system for the dump truck described in Patent Literature 1 below includes storage means, detection means, and calculation means (Summary, Paragraph 0008, and Claim 1). The above-described storage means stores stress data that occurs at a predetermined position of the dump truck when a respective plurality of external forces act on the dump truck. The above-described detection means detects directions and magnitudes of the external forces acting on the dump truck.

The above-described calculation means estimates temporal changes in a stress occurring at the predetermined position by interpolation or extrapolation based on the detection values of the above-described detection means and the stress data stored in the above-described storage means. According to this conventional stress calculation system, since a process of converting from a frequency domain to a time domain is not included when calculating the temporal changes of stress at a vehicle evaluation position, the temporal changes of stress at the vehicle evaluation position can be calculated with high accuracy (Patent Literature 1, Abstract, Paragraph 0009).

A stress calculation system for a work machine described in Patent Literature 2 below includes a load-related parameter detector, a posture-related parameter detector, and a calculation section (Summary, Paragraph 0009, Claim 1). The above-described load-related parameter detector detects a load-related parameter as a parameter indicating an occurring change in the work machine when a load is applied from outside. The above-described posture-related parameter detector detects a posture-related parameter as a parameter indicating a posture of the above-described work machine.

The above-described calculation section estimates a stress distribution of the above-described work machine at a time of the above-described output value based on the output values of the above-described load-related parameter detector and the above-described posture-related parameter detector. According to this conventional stress calculation system, it is possible to evaluate a stress at a desired position of the work machine using a small number of sensors. Thus, it is possible to maintain a motion performance and save cost of the work machine (Patent Literature 2, Abstract, Paragraph 0010).

A fatigue management system described in Patent Literature 3 below includes a stress calculation section, a damage degree calculation section, and an index value calculation section (Summary, Paragraph 0010, Claim 1). The above-described stress calculation section calculates stresses acting on a plurality of sites of a construction machine based on outputs of sensors attached to the above-described construction machine. The above-described damage degree calculation section calculates a cumulative damage degree of each of the above-described sites based on the stress.

The above-described index value calculation section calculates a fatigue index value weighted to the cumulative damage degree for each of the above-described sites. Accordingly, the use of the fatigue index value allows providing the fatigue management system that allows managing the fatigue of each site of a construction machine with higher precision than before (Patent Literature 3, Paragraph 0011).

Citation List

Patent Literature

Patent Literature 1: JP 2013-164396 A
Patent Literature 2: WO 2013/172277
Patent Literature 3: WO 2021/064776

Summary of Invention

Technical Problem

In the stress calculation system of the above-described Patent Literature 1, for example, the temporal changes of the stress at the vehicle evaluation position are acquired by the interpolation approximation or the extrapolation approximation based on the external forces detected by the above-described detection means and the stress data stored in the above-described storage means. In the stress calculation system for the work machine in the above-described Patent Literature 2, the stress distribution of the work machine at the time of the output value is estimated based on the output values of the pressure detector, the acceleration detector, the displacement detector, and the rotation angle detector.

Similarly, in the fatigue management system described in the above-described Patent Literature 3, the stresses acting on the plurality of sites of the above-described construction machine are calculated based on the outputs of the sensors attached to the construction machine. However, in order to estimate the stress acting on the dump truck with higher accuracy, there are limitations to the method of directly estimating the stress from the output values of the sensors, and there is room for improvement in the above conventional system.

The present disclosure provides a stress estimation device that allows estimating a stress acting on a dump truck with higher accuracy.

Solution to Problem

One aspect of the present disclosure is a stress estimation device that estimates a stress acting on a dump truck. The stress estimation device includes a storage section and a calculation section. The storage section stores a force calculation formula for calculating a force acting on a predetermined part of the dump truck based on an output value of a force sensor that detects a force acting on a suspension device of the dump truck or an output value of an acceleration sensor attached to the dump truck and the output value of the force sensor, and a stress calculation formula for calculating the stress acting on the dump truck based on the force. The calculation section includes a force calculation section that calculates the force using the output value of the force sensor or the output values of the acceleration sensor and the force sensor and the force calculation formula stored in the storage section, and a stress calculation section that calculates the stress acting on the dump truck using the force calculated by the force calculation section and the stress calculation formula stored in the storage section.

Advantageous Effects of Invention

The one aspect of the present disclosure provides the stress estimation device that allows estimating the stress acting on the dump truck with the higher accuracy.

Brief Description of Drawings

Fig. 1 is a block diagram illustrating one embodiment of a stress estimation device according to the present disclosure.

Fig. 2 is a side view illustrating one example of a dump truck as a target of the stress estimation device of Fig. 1.

Fig. 3 is a block diagram illustrating one example of a fatigue management system including the stress estimation device of Fig. 1.

Fig. 4 is a schematic diagram illustrating one example of forces acting on predetermined parts of the dump truck of Fig. 2.

Fig. 5 is a schematic diagram illustrating one example of forces acting on predetermined parts of the dump truck in Fig. 2.

Fig. 6 is a block diagram illustrating a modification example of the stress estimation device of Fig. 1.

Description of Embodiments

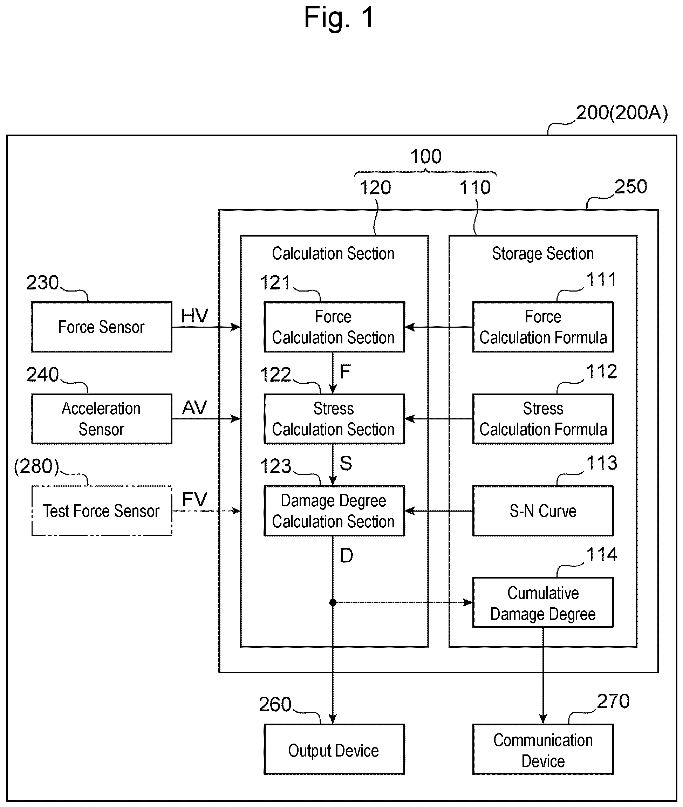

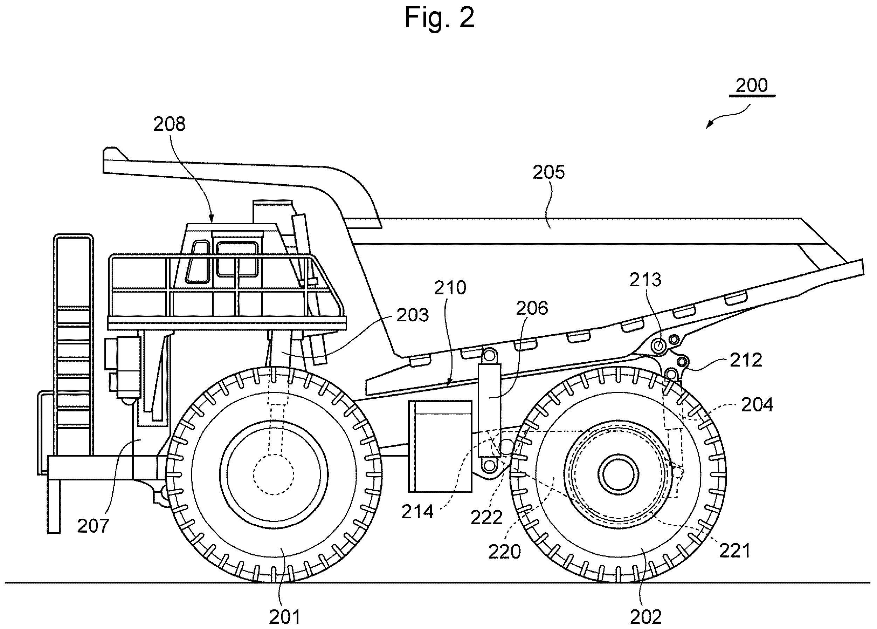

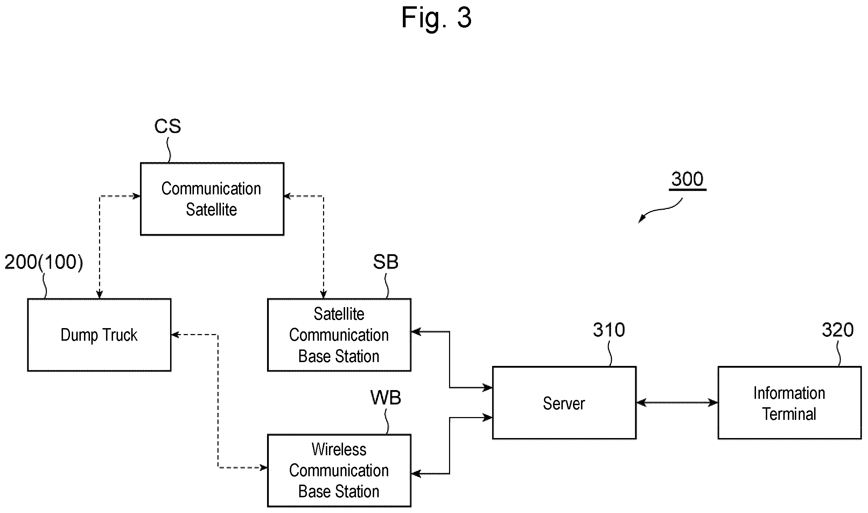

The following describes embodiments of a stress estimation device according to the disclosure with reference to the drawings. Fig. 1 is a block diagram illustrating one embodiment of a stress estimation device according to the present disclosure. Fig. 2 is a side view illustrating one example of a dump truck 200 as a target of a stress estimation device 100 of Fig. 1. Fig. 3 is a block diagram illustrating one example of a fatigue management system 300 including the stress estimation device 100 of Fig. 1.

As illustrated in Fig. 1, the stress estimation device 100 of the embodiment includes a storage section 110 and a calculation section 120, and estimates a stress acting on the dump truck 200 as illustrated in Fig. 2. The stress estimation device 100, for example, constitutes a part of the fatigue management system 300 that manages fatigues of parts of the dump truck 200, together with a server 310 and an information terminal 320 illustrated in Fig. 3.

First, the following provides a brief description of a configuration of the dump truck 200 as a target of the stress estimation device 100 of this embodiment, and then provides a detailed description of configurations of the stress estimation device 100 and the fatigue management system 300 of the embodiment. The dump truck 200 is a large-scale haulage vehicle that transports cargo such as ore mined in a mine, for example.

As illustrated in Fig. 2, the dump truck 200, for example, includes a frame 210, left and right front wheels 201, left and right rear wheels 202, left and right suspension devices 203 on a front wheel side each of which is configured from a hydraulic cylinder, left and right suspension devices 204 on a rear wheel side each of which is configured from a hydraulic cylinder, a vessel or a body 205, left and right hoist cylinders 206, a travel drive device 220, a grilled compartment 207, and a cab 208. As illustrated in Fig. 1, the dump truck 200 includes, for example, force sensors 230, an acceleration sensor 240, a controller 250, an output device 260, and a communication device 270. In Fig. 1, the force sensors 230 and the acceleration sensor 240 are described, but the dump truck 200 does not need to include both, and when the dump truck 200 includes the force sensors 230, the dump truck 200 does not need to include the acceleration sensor 240.

In Fig. 2, the illustration is omitted, but the force sensor 230 can be an oil pressure sensor that detects a pressure of the hydraulic cylinder of each of the suspension devices 203, 204. The force sensor 230 that detects a force acting on each of the suspension devices 203, 204 can be a load sensor, for example. In Fig. 1, one force sensor 230 is illustrated as a representative of the plurality of force sensors 230. As will be described in more detail later, the force sensor 230 outputs a force detection value HV, which is a hydraulic pressure detection value of the hydraulic cylinder that constitutes each of the suspension devices 203, 204, to the controller 250, as illustrated in Fig. 1.

The frame 210 is a frame shaped structure with a ladder shape, for example. The suspension devices 203 for the front wheel side are attached to the left and right of a front part of the frame 210, and the suspension devices 204 for the rear wheel side are attached to the left and right of a rear part of the frame 210. In addition, the frame 210 supports the body 205, which loads a cargo of the dump truck 200, from below. Although it is omitted in Fig. 2, when the dump truck 200 includes the acceleration sensor 240, the frame 210 is attached with the acceleration sensor 240 (see Fig. 1) that detects the acceleration of the dump truck 200.

The acceleration sensor 240 may also be attached to the body 205 on which the cargo is loaded. As will be described in more detail later, the acceleration sensor 240 outputs an acceleration detection value AV of the dump truck 200 to the controller 250, as illustrated in Fig. 1. An acceleration detected by the acceleration sensor 240 attached to the body 205 is in a proportional relationship with an inertia force acting on the body 205 when the dump truck 200 is traveling. Therefore, the acceleration sensor 240 also functions as an inertial force sensor that detects the inertia force acting on the frame 210.

A test dump truck 200A, which has the same configuration as the dump truck 200 as the target of the stress estimation device 100 in the embodiment and is used for a determination of a force calculation formula 111 described below, further includes test force sensors 280, as illustrated by a dash line in Fig. 1. The test force sensors 280 are attached to predetermined parts of the test dump truck 200A corresponding to predetermined parts of the dump truck 200 on which forces act, and detects forces acting on the predetermined parts of the test dump truck 200A. More specifically, the predetermined parts of the dump truck 200 are the parts corresponding to input positions of the forces to the analysis model of the dump truck 200 in the structural analysis that calculates the stresses acting on the dump truck 200.

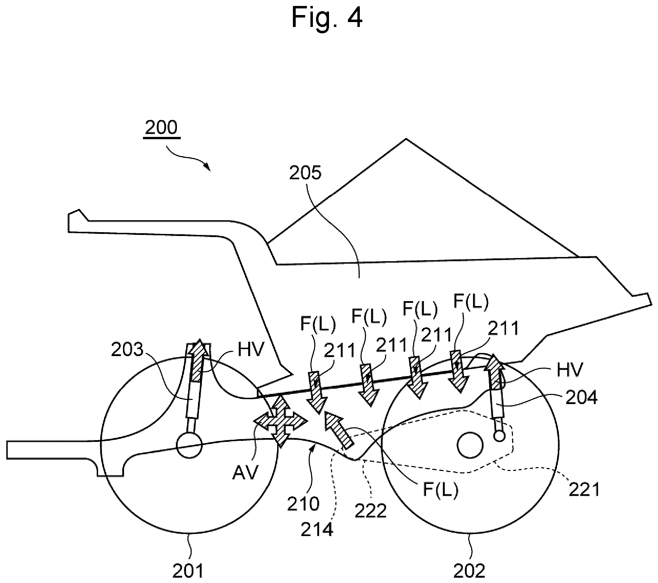

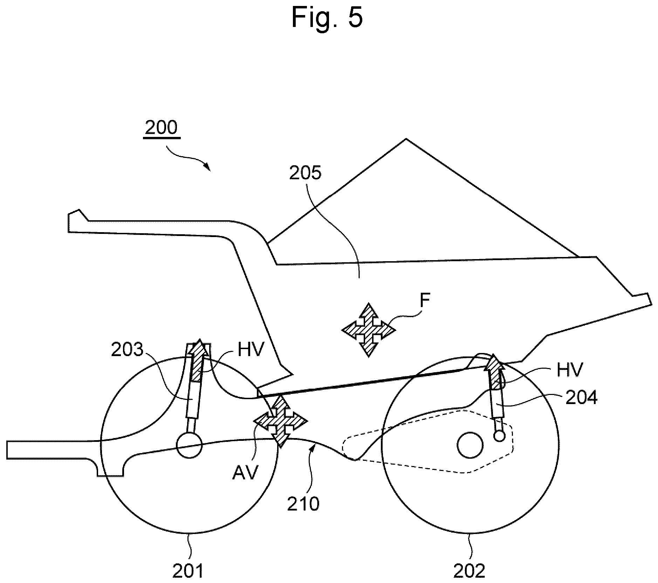

Figs. 4 and 5 are schematic diagrams illustrating one example of forces F acting on the predetermined parts of the dump truck 200 in Fig. 2. In the examples illustrated in Figs. 4 and 5, the predetermined parts of the dump truck 200 include a plurality of parts 211 of the frame 210 of the dump truck 200. The suspension devices 203, 204 are attached to the frame 210, which supports the body 205. The cargo of the dump truck 200 is loaded on the body 205. In addition, the predetermined parts of the dump truck 200 include a mounting member 214 of the frame 210 on which a force acts from a bracket 222 provided forward of an axle housing 221. More specifically, the predetermined parts of the dump truck 200 include, for example, the plurality of parts 211 of the frame 210 that contact the bottom of the body 205 and the mounting member 214 of the frame 210 that supports the axle housing 221.

In the example illustrated in Fig. 4, the forces F acting on the predetermined parts of the dump truck 200 are loads L acting from the body 205 to the plurality of parts 211 of the frame 210 due to the gravity acting on the body 205, on which the cargo is loaded, and the load L acting from the axle housing 221 to the mounting member 214 of the frame 210. In the example illustrated in Fig. 5, the forces F acting on the predetermined parts of the dump truck 200 are the forces F acting from the body 205 to the plurality of parts 211 of the frame 210 due to an inertia force acting on the body 205, on which the cargo is loaded, and the force F acting from the axle housing 221 to the mounting member 214 of the frame 210. For example, when the dump truck 200 is accelerating and/or turning, since the gravity, the inertia force and a centrifugal force simultaneously act on the body 205, on which the cargo is loaded, a complex combination of the forces F acts on the predetermined parts of the dump truck 200 as illustrated in Figs. 4 and 5.

The left and right front wheels 201 are steering wheels that are rotatable and supported via the left and right suspension devices 203 at the front part of the frame 210, as illustrated in Fig. 2. The left and right rear wheels 202 are drive wheels that are rotatable and supported by the left and right suspension devices 204 at the rear part of the frame 210. The left and right suspension devices 203 on the front wheel side elastically support the left and right front wheels 201, and the left and right suspension devices 204 on the rear wheel side elastically support the left and right rear wheels 202 via the axle housing 221 of the travel drive device 220.

For example, a rear part of the bottom of the body 205 is connected to left and right brackets 212 of the frame 210 via connecting pins 213, and top ends of the hoist cylinders 206 are rotatably connected to a front part of the bottom of the body 205. A bottom end of the hoist cylinder 206 is rotatably connected to the frame 210. The hoist cylinder 206 is, for example, configured as the hydraulic cylinder. When the hoist cylinder 206 extends, the body 205 tilts on the frame 210 with the connecting pin 213 as the rotation center, and the cargo loaded on the body 205 is dropped.

The travel drive device 220 is connected to the left and right rear wheels 202 and drives to rotate them. The travel drive device 220, for example, includes the axle housing 221 and the bracket 222. The axle housing 221, for example, includes a cylindrical shape that extends to the left and right and houses a travel motor, a reduction gear, and the like, which are omitted from the illustration. The bracket 222 is, for example, provided so as to protrude forward from the axle housing 221. A front end portion of the bracket 222 is attached to the mounting member 214 of the frame 210 in a turnable manner.

The grilled compartment 207 defines a machine room in the front part of the frame 210. The grilled compartment 207 houses an engine, a hydraulic pump, and the like therein, the illustration of which is omitted. The cab 208 is provided on a flat floor positioned at a top of the grilled compartment 207. The cab 208 is provided in a box shape to define a driver's cabin where the operator boards. Although it is omitted from the illustration, the cab 208 includes a driver's seat where the operator is seated, a steering wheel, operation pedals, and the like.

The controller 250 is configured, for example, by one or more microcontrollers including a central processing unit (CPU), a memory, a timer, and an input/output section, and is housed in the cab 208. As will be described in more detail later, in this embodiment, the stress estimation device 100 is configured, for example, by the controller 250 of the dump truck 200, and includes the storage section 110 and the calculation section 120. The storage section 110 and the calculation section 120 represent functions of the stress estimation device 100, which are realized, for example, by executing a program stored in the memory of the controller 250 that constitutes the stress estimation device 100 by the CPU.

The output device 260 is, for example, configured with a display device and a speaker, and is housed in the cab 208 and connected to the controller 250.
The output device 260, for example, displays information output from the stress estimation device 100 on a screen or outputs it by voice, thereby notifying the operator in the cab 208 of the information output from the stress estimation device 100. The communication device 270 is mounted on the dump truck 200 and connected to the controller 250, and includes at least one of a wireless communication device that communicates with outside via a wireless communication line and a satellite communication device that communicates with outside via a satellite communication line.

Next, configurations of the stress estimation device 100 and the fatigue management system 300 in this embodiment will be described in detail. As illustrated in Fig. 1, the stress estimation device 100 of the embodiment includes the storage section 110 and the calculation section 120, and estimates stresses S acting on the dump truck 200. As described above, the storage section 110 and the calculation section 120 represent the functions of the stress estimation device 100, which are realized, for example, by executing the program stored in the memory of the controller 250 of the dump truck 200 by the CPU.

For example, the force calculation formula 111 and the stress calculation formula 112 are stored in the storage section 110. In the example illustrated in Fig. 1, an S-N curve 113 of a target part of the dump truck 200 and a cumulative damage degree 114 of the target part calculated by the calculation section 120 are stored in the storage section 110. The force calculation formula 111 is a formula for calculating the forces F that act on the predetermined parts of the dump truck 200, based on output values of the force sensors 230 that detect hydraulic pressures of the hydraulic cylinders constituting the suspension devices 203, 204 of the dump truck 200, or output values of the acceleration sensor 240 and the force sensors 230 attached to the dump truck 200. As an example of the force calculation formula 111, the following formulae (1) to (3) are shown.

[Math. 1]

$$\begin{bmatrix} f_1 \\ f_2 \\ \vdots \end{bmatrix} = K \begin{bmatrix} s_1 \\ s_2 \\ \vdots \end{bmatrix} + A \qquad (1)$$

$$\begin{bmatrix} f_1 \\ f_2 \\ \vdots \end{bmatrix} = L_1 \begin{bmatrix} s_1 \\ s_2 \\ \vdots \end{bmatrix} + L_2 \begin{bmatrix} s_1^2 \\ s_2^2 \\ \vdots \end{bmatrix} + L_3 \begin{bmatrix} s_1^3 \\ s_2^3 \\ \vdots \end{bmatrix} + \cdots + A \qquad (2)$$

$$\begin{bmatrix} f_1 \\ f_2 \\ \vdots \end{bmatrix} = M_1 \begin{bmatrix} s_1 \\ s_2 \\ \vdots \end{bmatrix} + M_2 \begin{bmatrix} s_1' \\ s_2' \\ \vdots \end{bmatrix} + M_3 \begin{bmatrix} s_1'' \\ s_2'' \\ \vdots \end{bmatrix} + A \qquad (3)$$

In the force calculation formula 111 shown in the above-described formula (1) to formula (3), $f_1$, $f_2$, ... are the forces F acting on the predetermined parts of the dump truck 200, and $s_1$, $s_2$, ... are the output values of the force sensors 230 or the acceleration sensor 240, at least one of which includes the output value of the force sensor 230. In addition, $s_1'$, $s_2'$, ... are the first derivative values of the output values $s_1$, $s_2$, ... of the force sensors 230 or the acceleration sensor 240, and $s_1''$, $s_2''$, ... are the second derivative values of the output values $s_1$, $s_2$, ... of the force sensors 230 or the acceleration sensor 240. In addition, K, $L_1$ to $L_3$, $M_1$ to $M_3$, and A are constants based on properties of the input forces F.

In addition, $s_1$, $s_2$, ... may all be the output values of the force sensors 230. When at least one of them includes the output value of the force sensor 230, the others may all be the output values of the acceleration sensor 240, or may be a mixture of a plurality of the output values of the force sensor 230 and the acceleration sensor 240.

The force calculation formula 111 can be determined, for example, as follows. The test dump truck 200A having the same configuration as the ordinary dump truck 200 illustrated in Figs. 1 and 2 and further including the test force sensors 280 as illustrated by the dash line in Fig. 1 is traveled over a predetermined period under various conditions including presence or absence of a cargo and presence or absence of a gradient. The force detection values FV as output values of the test force sensors 280 of the test dump truck 200A, the force detection values HV as the output values of the force sensors 230, and the acceleration detection value AV as the output value of the acceleration sensor 240, are acquired. A relationship between the output values of the respective sensors that have been acquired is then analyzed using, for example, a multiple regression equation or a regression equation by machine learning, and the force calculation formula 111 is determined.

In other words, the force calculation formula 111 is determined based on, for example, the output values of the test force sensors 280 of the test dump truck 200A and the output values of the force sensors 230 of the test dump truck 200A, or the output values of the test force sensors 280 of the test dump truck 200A and the output values of the force sensors 230 and the acceleration sensor 240 of the test dump truck 200A. For example, the test force sensor 280 is not attached to the normal dump truck 200 as the target of the stress estimation device 100, but are attached to the predetermined parts of the test dump truck 200A, which has the same configuration as the normal dump truck 200, and detects the forces F acting on the predetermined parts of the test dump truck 200A that corresponds to the predetermined parts of the normal dump truck 200.

It is also possible to determine the force calculation formula 111 based on the analysis model of the dump truck 200, for example. Specifically, the conditions of the dump truck 200, such as its speed, acceleration, and angular velocity, are input into the analysis model of the dump truck 200. The analysis model is then used to calculate the forces F acting on the respective parts of the dump truck 200 due to the gravity and the inertia force acting on the respective parts of the dump truck 200, the force detection values HV as the output values of the force sensors 230, or the forces F acting on the respective parts, the force detection values HV as the output values of the force sensors 230, and the acceleration detection value AV as the output value of the acceleration sensor 240. The force calculation formula 111 is determined by analyzing the relationship between the calculated forces F acting on the predetermined parts of the dump truck 200 and the calculated force detection values HV, or the relationship between the forces F acting on the predetermined parts, the force detection values HV, and the acceleration detection value AV, for example, using the multiple regression equation or the regression equation by machine learning.

On the other hand, the stress calculation formula 112 is a formula for calculating the stresses S acting on the dump truck 200 based on the forces F calculated using the above-described force calculation formula 111, that is, the forces F acting on the predetermined parts of the dump truck 200. As an example of the stress calculation formula 112, the following formulae (4) to (6) are shown.

[Math. 2]

$$\begin{bmatrix} \sigma_1 \\ \sigma_2 \\ \vdots \end{bmatrix} = K_s \begin{bmatrix} s_1 \\ s_2 \\ \vdots \end{bmatrix} + K_f \begin{bmatrix} f \\ f_2 \\ \vdots \end{bmatrix} + A \tag{4}$$

$$\begin{bmatrix} \sigma_1 \\ \sigma_2 \\ \vdots \end{bmatrix} = L_{s1} \begin{bmatrix} s_1 \\ s_2 \\ \vdots \end{bmatrix} + L_{s2} \begin{bmatrix} s_1{}^2 \\ s_2{}^2 \\ \vdots \end{bmatrix} + L_{s3} \begin{bmatrix} s_1{}^3 \\ s_2{}^3 \\ \vdots \end{bmatrix} + \cdots + L_{f1} \begin{bmatrix} f_1 \\ f_2 \\ \vdots \end{bmatrix} + L_{f2} \begin{bmatrix} f_1{}^2 \\ f_2{}^2 \\ \vdots \end{bmatrix} + L_{f3} \begin{bmatrix} f_1{}^3 \\ f_2{}^3 \\ \vdots \end{bmatrix} + \cdots + A \tag{5}$$

$$\begin{bmatrix} \sigma_1 \\ \sigma_2 \\ \vdots \end{bmatrix} = M_{s1} \begin{bmatrix} s_1 \\ s_2 \\ \vdots \end{bmatrix} + M_{s2} \begin{bmatrix} s_1{}' \\ s_2{}' \\ \vdots \end{bmatrix} + M_{s3} \begin{bmatrix} s_1{}'' \\ s_2{}'' \\ \vdots \end{bmatrix} + M_{f1} \begin{bmatrix} f_1 \\ f_2 \\ \vdots \end{bmatrix} + M_{f2} \begin{bmatrix} f_1{}' \\ f_2{}' \\ \vdots \end{bmatrix} + M_{f3} \begin{bmatrix} f_1{}'' \\ f_2{}'' \\ \vdots \end{bmatrix} + A \tag{6}$$

In the stress calculation formula 112 shown in the above-described formula (4) to formula (6), $\sigma_1$, $\sigma_2$, ... are the stresses S acting on the dump truck 200, for example, the stresses S acting on the respective parts that constitute the frame 210. In addition, $s_1$, $s_2$, ... are the output values of the force sensors 230 or the acceleration sensor 240, $s_1{}'$, $s_2{}'$, ... are the first derivative values of those output values, and $s_1{}''$, $s_2{}''$, ... are the second derivative values of those output values. In addition, $f_1$, $f_2$, ... are the forces F acting on the respective predetermined parts of the dump truck 200 calculated using the force calculation formula 111, $f_1{}'$, $f_2{}'$, ... are the first derivative values of those forces F, and $f_1{}''$, $f_2{}''$, ... are the second derivative values of those forces F. In addition, $K_s$, $K_f$, $L_{s1}$ to $L_{s3}$, $L_{f1}$ to $L_{f3}$, $M_{s1}$ to $M_{s3}$, $M_{f1}$ to $M_{f3}$, and A are constants based on the properties of the input forces F.

In the above-described formulae (4) to (6), the forces F calculated using the force calculation formula 111 are essential for the calculation of the stresses S, but for $s_1$, $s_2$, ..., either the output values of the force sensors 230 or the acceleration sensor 240 can be used.

As described above, the predetermined parts of the dump truck 200 are, for example, the parts corresponding to the input positions of the forces F to the analysis model of the dump truck 200 in the structural analysis that calculates the stresses S acting on the dump truck 200. The stress calculation formula 112 shown in the above-described (4) and (6) is derived from the analysis model, for example. In other words, the stress calculation formula 112 can be determined, for example, as follows. By inputting the forces F of various sizes and directions to the input positions of the forces F in the analysis model of the dump truck 200, the stresses S acting on the respective parts of the dump truck 200 are calculated by the analysis model. The relationship between the input forces F and the calculated stresses S is then acquired using the multiple regression equation, the regression equation using machine learning, and the like, the stress calculation formula 112 shown in the above-described (4) to (6) is determined.

The S-N curve 113 of the part of the dump truck 200 stored in the storage section 110 is a curve that expresses the relationship between the time history waveform of the stress S acting on the part of the dump truck 200 and the number of repetitions of the stress amplitude. The S-N curve 113 is used to calculate a cumulative damage degree D by a damage degree calculation section 123 of the calculation section 120. For example, the S-N curve 113 of each part of the dump truck 200 for which it is necessary to manage the fatigue based on the cumulative damage degree D is stored in the storage section 110.

As illustrated in Fig. 1, the calculation section 120 includes a force calculation section 121 and a stress calculation section 122. In addition, the calculation section 120 may also include, for example, the damage degree calculation section 123. Each section of these calculation sections 120 represents each function of the stress estimation device 100, which is realized, for example, by executing the program stored in the memory by the CPU, as described above. In addition, each section of these calculation sections 120 may be configured by one device, or two or more thereof may be configured by one device.

The force calculation section 121 calculates the forces F acting on the predetermined parts of the dump truck 200, using the output values of the force sensors 230, or the output values of the force sensors 230 and the acceleration sensor 240, and the force calculation formula 111 stored in the storage section 110. The stress calculation section 122 calculates the stresses S acting on the dump truck 200 using the forces F calculated by the force calculation section 121 and the stress calculation formula 112 stored in the storage section 110. The damage degree calculation section 123 calculates the cumulative damage degrees D of the parts of the dump truck 200 using the stresses S calculated by the stress calculation section 122 and the S-N curves 113 stored in the storage section 110.

In more detail, the damage degree calculation section 123 performs a frequency analysis of the time history stress waveform using a range pair method, peak valley method, or a rainflow method, for example. Subsequently, the damage degree calculation section 123 calculates the cumulative damage degree D using a minor rule or a modified minor rule, as shown in the following formula (7). In formula (7), D is the cumulative damage degree, $n_i$ is a load count of stress S,

and $N_i$ is a fatigue life calculated from the S-N curve 113.
[Math. 3]

$$D = \sum_i \frac{n_i}{N_i} \qquad\qquad (7)$$

The cumulative damage degree D of each part of the dump truck 200 calculated by the damage degree calculation section 123 is stored in the storage section 110, for example. In addition, the cumulative damage degree D of each part of the dump truck 200 is transmitted to outside via the satellite communication line or the wireless communication line by the communication device 270, for example, together with the identification information and position information of the individual dump truck 200. In addition, the cumulative damage degree D of each part of the dump truck 200 is notified to the operator of the dump truck 200 by the output device 260.

As illustrated in Fig. 3, the fatigue management system 300 of the embodiment includes, for example, the stress estimation device 100 mounted on the dump truck 200 and the server 310. The fatigue management system 300 may also include the information terminal 320, for example. The server 310 receives the cumulative damage degrees D, which are transmitted from the communication devices 270 of the plurality of dump trucks 200 via the wireless communication line or the satellite communication line, via a network, such as a wireless communication base station WB or a communication satellite CS and a satellite communication base station SB, and the internet connection.

The server 310 stores the cumulative damage degree D of each part of each dump truck 200 received from the plurality of dump trucks 200 together with the identification information and the position information, in a database of the server 310. For example, the database of the server 310 stores customer information associated with the identification information of each dump truck 200. The database may be provided outside of the server 310. The server 310 manages the fatigues of the parts of the dump truck 200 by, for example, generating a list of the dump trucks 200 that have the parts with the cumulative damage degrees D having exceeded a predetermined threshold.

The information terminal 320 includes, for example, a personal computer installed at a base of a customer who has purchased the dump truck 200 or at a maintenance base for the dump truck 200, and a mobile information terminal carried by the operator or the maintenance personnel of the dump truck 200. The information terminal 320 is connected to the server 310 via the wireless communication line or the network, for example.

For example, when the identification information of the dump truck 200 is input, the information terminal 320 acquires the cumulative damage degree D of the part associated with the identification information, from the server 310. In addition, the information terminal 320 receives the list of the dump trucks 200 including the parts with the cumulative damage degrees D having exceeded the predetermined threshold, from the server 310, based on the identification information of the dump trucks 200 that has been registered in advance.

As described above, the stress estimation device 100 of the embodiment includes the storage section 110 and the calculation section 120, and estimates the stresses S acting on the dump truck 200. The storage section 110 stores the force calculation formula 111 and the stress calculation formula 112. The force calculation formula 111 is the formula for calculating the forces F acting on the predetermined parts of the dump truck 200 based on the output values of the force sensors 230 that detect the forces acting on the suspension devices 203, 204 of the dump truck 200, or the output value of the acceleration sensor 240 attached to the dump truck 200 and the output values of the force sensors 230. The stress calculation formula 112 is the formula for calculating the stresses S acting on the dump truck 200 based on the forces F acting on the predetermined parts of the dump truck 200. The calculation section 120 includes the force calculation section 121 and the stress calculation section 122. The force calculation section 121 calculates the forces F acting on the predetermined parts of the dump truck 200 using the output values of the force sensors 230 or the output value of the acceleration sensor 240 and the output values of the force sensors 230, and the force calculation formula 111 stored in the storage section 110. The stress calculation section 122 calculates the stresses S acting on the dump truck 200 using the forces F calculated by the force calculation section 121 and the stress calculation formula 112 stored in the storage section 110.

With this configuration, the stress estimation device 100 of the embodiment can first estimate the forces F acting on the predetermined parts of the dump truck 200, and then estimate the stresses S acting on the dump truck 200 based on the estimated force F. Therefore, it is possible to estimate the stresses S acting on the dump truck 200 with higher accuracy compared with the case where the stress is estimated directly from the output values of the sensors, as in the above-described conventional stress calculation system and the fatigue management system. In addition, the force calculation formula 111 is stored in advance in the storage section 110. Therefore, the calculation section 120 can easily calculate the forces F acting on the predetermined parts of the dump truck 200 and their time history waveforms based on the output values of the force sensor 230 or the output values of the acceleration sensor 240 and the force sensor 230, and the force calculation formula 111 by the force calculation section 121. In addition, since the stress calculation formula 112 is stored in the storage section 110 in advance, the calculation section 120 can easily calculate the stresses S acting on the dump truck 200 and their time history waveforms based on the stress calculation formula 112 and the forces F by the stress calculation section 122.

In the stress estimation device 100 of this embodiment, the predetermined parts of the dump truck 200 are the parts corresponding to the input positions of the forces F with respect to the analysis model of the dump truck 200 in the structural analysis that calculates the stresses S acting on the dump truck 200. The stress calculation formula 112 is derived from the analysis model of the dump truck 200.

With this configuration, the stress estimation device 100 of the embodiment can acquire the stress calculation formula 112 that can estimate the stresses S acting on the dump truck 200 with high accuracy, using the analysis model of the dump truck 200 and the forces F acting on the predetermined parts of the dump truck 200. Accordingly, it is possible to estimate the stresses S acting on the dump truck 200 with higher accuracy using the stress estimation device 100 of the embodiment.

In addition, in the stress estimation device 100 of the embodiment, the force calculation formula 111 is determined based on the output values of the test force sensors 280 attached to the test dump truck 200A and the output values of the force sensors 230 of the test dump truck 200A or the output values of the test force sensors 280 of the test dump truck 200A, the output value of the acceleration sensor 240 attached to the test dump truck 200A, and the output values of the force sensors 230. The test force sensors 280 are attached to the predetermined parts of the test dump truck 200A, which has the same configuration as the dump truck 200, and detects the forces F acting on the predetermined parts of the test dump truck 200A.

With this configuration, it is possible for the stress estimation device 100 of the embodiment to collect the output values of the test force sensors 280 and the output values of the force sensors 230 and the acceleration sensor 240 of the test dump truck 200A by causing the test dump truck 200A to travel. Therefore, by analyzing the relationship between the collected detection values of the respective sensors, the stress estimation device 100 can obtain the force calculation formula 111 that allows estimating the forces F acting on the predetermined parts of the dump truck 200 with high accuracy, based on the output values of the force sensors 230 or the output values of the force sensors 230 and the acceleration sensor 240. Accordingly, the stress estimation device 100 of the embodiment allows estimating the stresses S acting on the dump truck 200 with higher accuracy.

In the stress estimation device 100 of the embodiment, the predetermined parts of the dump truck 200 include the plurality of parts 211 of the frame 210 of the dump truck 200. The frame 210 is a part that supports the body 205, to which the suspension devices 203, 204 are attached and the cargo of the dump truck 200 is loaded.

With this configuration, the stress estimation device 100 of the embodiment can estimate the stresses S acting on the frame 210, which is relatively prone to the fatigue accumulation due to the relatively large forces F acting on the plurality of parts 211 from the body 205 on which the cargo is loaded, with high accuracy. Therefore, the stress estimation device 100 of the embodiment can improve the safety of the dump truck 200.

In addition, in the stress estimation device 100 of the embodiment, the storage section 110 stores the S-N curves 113, which are the time history waveforms of the stresses S acting on the parts of the dump truck 200 and the number of repetitions of the stress amplitude. In addition, the calculation section 120 includes the damage degree calculation section 123 that calculates the cumulative damage degrees D of the parts of the dump truck 200 using the stresses S calculated by the stress calculation section 122 and the S-N curves 113 stored in the storage section 110.

With this configuration, the stress estimation device 100 of the embodiment allows calculating the cumulative damage degrees D of the parts of the dump truck 200 with higher accuracy, based on the stresses S acting on the dump truck 200, which has become possible to calculate with higher accuracy. As a result, the fatigue management system 300, which includes the stress estimation device 100 of the embodiment, allows managing the fatigue of each part of the plurality of dump trucks 200 with higher accuracy than the conventional fatigue management systems, and promoting efficient part replacement and maintenance.

As described above, the embodiment allows providing the stress estimation device 100 that can estimate the stresses S acting on the dump truck 200 with higher accuracy, and the fatigue management system 300 that includes the stress estimation device 100. The stress estimation device of the disclosure is not limited to the above-described embodiment.

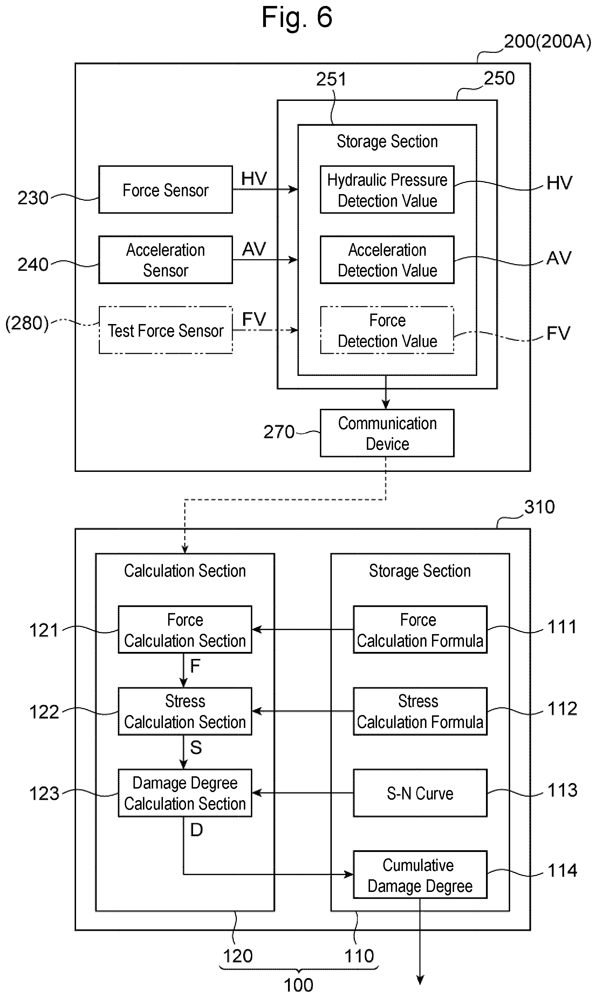

Fig. 6 is a block diagram illustrating a modification example of the stress estimation device 100 illustrated in Fig. 1. In the example illustrated in Fig. 6, the stress estimation device 100 is, for example, configured by the server 310. In other words, the storage section 110 and the calculation section 120 of the stress estimation device 100 are functions of the stress estimation device 100 that are realized, for example, by executing the program stored in the memory of the server 310 by the CPU of the server 310.

In this case, the controller 250 of the dump truck 200 constitutes a storage section 251 that stores the force detection values HV output from the force sensors 230, or the acceleration detection value AV output from the acceleration sensor 240 and the force detection values HV output from the force sensors 230, and transmits them to the server 310 via the communication device 270. In addition, the storage section 251 of the test dump truck 200A also stores the force detection values FV of the test force sensors 280 and transmits them to the server 310 via the communication device 270.

The stress estimation device 100 according to the modification example illustrated in Fig. 6 can also have a similar effect to the stress estimation device 100 illustrated in Fig. 1. In other words, the stress estimation device 100 can be configured by at least one of the controller 250 of the dump truck 200, the server 310, or the information terminal 320. In addition, the calculation section 120 does not have to include the damage degree calculation section 123, and instead of the damage degree calculation section 123, it may include an index value calculation section that calculates the fatigue index value described in Patent Literature 3.

The above has described in detail the embodiment of the stress estimation device according to the present disclosure using drawings, but the specific configuration is not limited to this embodiment, and even if there are design changes, and the like within the range that does not deviate from the gist of the present disclosure, they are included in the present disclosure.

Reference Signs List

| | |
|---|---|
| 100 | Stress estimation device |
| 110 | Storage section |
| 111 | Force calculation formula |
| 112 | Stress calculation formula |
| 113 | S-N curve |
| 114 | Cumulative damage degree |
| 120 | Calculation section |
| 121 | Force calculation section |
| 122 | Stress calculation section |
| 123 | Damage degree calculation section |
| 200 | Dump truck |
| 200A | Test dump truck |
| 210 | Frame |
| 211 | Part of frame (predetermined part) |
| 203 | Suspension device |
| 204 | Suspension device |
| 205 | Body |
| 230 | Force sensor |
| 240 | Acceleration sensor |
| 280 | Test force sensor |
| D | Cumulative damage degree |
| F | Force |
| S | Stress |

**Claims**

1. A stress estimation device that estimates a stress acting on a dump truck, comprising:

   a storage section; and
   a calculation section,
   wherein the storage section stores a force calculation formula for calculating a force acting on a predetermined part of the dump truck based on an output value of a force sensor that detects a force acting on a suspension device of the dump truck or an output value of an acceleration sensor attached to the dump truck and the output value of the force sensor, and a stress calculation formula for calculating the stress acting on the dump truck based on the force, and
   wherein the calculation section includes a force calculation section that calculates the force using the output value of the force sensor or the output values of the acceleration sensor and the force sensor and the force calculation formula stored in the storage section, and a stress calculation section that calculates the stress acting on the dump truck using the force calculated by the force calculation section and the stress calculation formula stored in the storage section.

2. The stress estimation device according to claim 1,

wherein the predetermined part is a part corresponding to an input position of a force for an analysis model of the dump truck in a structural analysis that calculates the stress acting on the dump truck, and
wherein the stress calculation formula is derived from the analysis model.

3. The stress estimation device according to claim 1,
wherein the force calculation formula is determined based on an output value of a test force sensor attached to the predetermined part of a test dump truck having a same configuration as the dump truck and an output value of the force sensor of the test dump truck, or the output value of the test force sensor, the output value of the acceleration sensor, and the output value of the force sensor.

4. The stress estimation device according to claim 1,
wherein the predetermined part includes a plurality of parts of a frame of the dump truck supporting a body to which the suspension device is attached and a cargo of the dump truck is loaded.

5. The stress estimation device according to claim 1,

wherein the storage section stores a S-N curve as a relationship between a time history waveform of a stress acting on the part of the dump truck and a number of repetitions of the stress amplitude, and
wherein the calculation section has a damage degree calculation section that calculates a cumulative damage degree of the part using the stress calculated by the stress calculation section and the S-N curve stored in the storage section.

# Fig. 1

200(200A)

100

120    110    250

| 230 | HV | Calculation Section | | Storage Section |
|---|---|---|---|---|

**Calculation Section**

121 Force Calculation Section

122 Stress Calculation Section

123 Damage Degree Calculation Section

**Storage Section**

111 Force Calculation Formula

112 Stress Calculation Formula

113 S-N Curve

114 Cumulative Damage Degree

230 Force Sensor → HV

240 Acceleration Sensor → AV

(280) Test Force Sensor → FV

F

S

D

260 Output Device

270 Communication Device

# Fig. 2

# Fig. 3

EP 4 600 621 A1

# Fig. 4

# Fig. 5

# Fig. 6

200(200A)

251    250

## Storage Section

230 — Force Sensor → HV → Hydraulic Pressure Detection Value → HV

240 — Acceleration Sensor → AV → Acceleration Detection Value → AV

(280) — Test Force Sensor → FV → Force Detection Value → FV

270 — Communication Device

310

## Calculation Section

## Storage Section

121 — Force Calculation Section ← Force Calculation Formula — 111

F

122 — Stress Calculation Section ← Stress Calculation Formula — 112

S

123 — Damage Degree Calculation Section ← S-N Curve — 113

D

Cumulative Damage Degree — 114

120    110

100

## INTERNATIONAL SEARCH REPORT

| International application No. |
| --- |
| **PCT/JP2023/036188** |

**A. CLASSIFICATION OF SUBJECT MATTER**

*G01L 1/00*(2006.01)i; *G01L 1/02*(2006.01)i
FI: G01L1/00 M; G01L1/02

According to International Patent Classification (IPC) or to both national classification and IPC

**B. FIELDS SEARCHED**

Minimum documentation searched (classification system followed by classification symbols)

G01L 1/00- 1/26; G01L 5/00- 5/28; E02F9/00-9/28; G06Q10/00-10/30; G06Q50/00-50/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021/064776 A1 (HITACHI CONSTRUCTION MACHINERY CO., LTD.) 08 April 2021 (2021-04-08) entire text, all drawings | 1-5 |
| A | WO 2013/172277 A1 (HITACHI CONSTRUCTION MACHINERY CO., LTD.) 21 November 2013 (2013-11-21) entire text, all drawings | 1-5 |
| A | WO 2013/122066 A1 (HITACHI CONSTRUCTION MACHINERY CO., LTD.) 22 August 2013 (2013-08-22) entire text, all drawings | 1-5 |
| A | US 2014/0244101 A1 (TECH MINING PTY LTD.) 28 August 2014 (2014-08-28) entire text, all drawings | 1-5 |
| A | CN 114357614 A (SOUTHWEST TRAFFIC UNIVERSITY) 15 April 2022 (2022-04-15) entire text, all drawings | 1-5 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **22 November 2023** | **05 December 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/036188**

| Patent document cited in search report | | | Publication date (day/month/year) | Patent family member(s) | | | Publication date (day/month/year) |
|---|---|---|---|---|---|---|---|
| WO | 2021/064776 | A1 | 08 April 2021 | AU | 2019468667 | A1 | |
| | | | | CN | 113396437 | A | |
| | | | | EP | 4040371 | A1 | |
| | | | | US | 2022/0178115 | A1 | |
| WO | 2013/172277 | A1 | 21 November 2013 | (Family: none) | | | |
| WO | 2013/122066 | A1 | 22 August 2013 | JP | 2013-164396 | A | |
| US | 2014/0244101 | A1 | 28 August 2014 | AU | 2012313336 | A1 | |
| | | | | CL | 2014000676 | A1 | |
| | | | | CN | 103874807 | A | |
| | | | | WO | 2013/040633 | A1 | |
| | | | | ZA | 201402813 | B | |
| CN | 114357614 | A | 15 April 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013164396 A
- WO 2013172277 A
- WO 2021064776 A